**Europäisches Patentamt**

**European Patent Office**

**Office européen des brevets**

(19)

(11) Publication number : **0 327 071 B1**

(12) # EUROPEAN PATENT SPECIFICATION

(45) Date of publication of patent specification :
03.05.95 Bulletin 95/18

(51) Int. Cl.⁶ : **G02F 1/133**

(21) Application number : **89101748.5**

(22) Date of filing : **01.02.89**

(54) Electro-optical device.

(30) Priority : **02.02.88 JP 12869/88 U**
**04.02.88 JP 24395/88**

(43) Date of publication of application :
**09.08.89 Bulletin 89/32**

(45) Publication of the grant of the patent :
**03.05.95 Bulletin 95/18**

(84) Designated Contracting States :
**DE FR GB**

(56) References cited :
**EP-A- 0 216 632**
**GB-A- 2 112 541**
**US-A- 4 709 991**
**PATENT ABSTRACTS OF JAPAN, vol. 9, no.**
**327 (P-415)[2050], 21st December 1985 ; &**
**JP-A-60 153 025**

(72) Inventor : **Ono, Yoichi**
**c/o Seiko Epson Corporation**
**3-5, Owa 3-chome**
**Suwa-shi Nagano-ken (JP)**
Inventor : **Hinata, Shoji**
**c/o Seiko Epson Corporation**
**3-5, Owa 3-chome**
**Suwa-shi Nagano-ken (JP)**
Inventor : **Wakabayashi, Satoshi**
**c/o Seiko Epson Corporation**
**3-5, Owa 3-chome**
**Suwa-shi Nagano-ken (JP)**
Inventor : **Fujii, Kunio**
**2-3 Inaba Higashi**
**Ohgaki-shi Gifu-ken (JP)**

(74) Representative : **Hoffmann, Eckart, Dipl.-Ing. et al**
**Patentanwalt**
**Bahnhofstrasse 103**
**D-82166 Gräfelfing (DE)**

(73) Proprietor : **SEIKO EPSON CORPORATION**
**4-1, Nishishinjuku 2-chome**
**Shinjuku-ku Tokyo-to (JP)**

## Description

The invention relates to an electro-optical device in which a liquid crystal is sandwiched by flexible substrates.

The document JP-A-60-153025 discloses an electro-optical device according to the prior art portion of claim 1 wherein spacers are fixed to an aligning film on one of two opposing flexible substrates. Where the spacers are fixed to an aligning film, there is a variation of the depth by which the spacers sink into the substrate surface depending on the hardness of the respective flexible substrate surface to which the spacer is fixed. Therefore, the cell thickness cannot be fully uniformed.

The document EP-A-0 216 632 discloses a similar electro-optical device wherein spacer particles are dispersed and arranged between the two substrates which are furthermore spot-bonded to each other by adhesive particles comprising an epoxy resin with a latent curing agent. Thus, these adhesive particles will finally be fixed to both substrates.

The document JP-A-60-6982 discloses an electro-optical device having a polyvinylidene chloride layer joined to the side of a base of phenoxy resin opposite to the liquid crystal layer. In this prior art, although the substrate comprises a polyvinylidene chloride resin layer acting as a gas barrier layer, the gas barrier properties are not sufficient. Therefore, gas comes into the liquid crystal through the substrate and causes a defective display due to air bubbles. Further, a part of the polyvinylidene chloride resin is dissolved to discharge chlorine, and disadvantageously, the electric current of the liquid crystal electro-optical device increases and the reliability is lowered. Furthermore, the resin becomes discolored and, therefore, the appearance is impaired.

In the prior art of JP-A-60-153025, the aligning film extends to a portion where a sealing compound for adhering the upper and lower substrates together is applied. Since the adhesion between the substrate and the aligning film is very poor, the strength of the adhesive bond between the upper and lower substrates becomes weak. In such case, if pressure is applied to the surface of the LCD panel, the resulting increased internal pressure may at least locally loosen the bonding and injure the sealing.

On the other hand, when the aligning film does not extend to the portion where the sealing compound is applied, there is no spacer in the portion where the aligning film is formed around the sealing compound forming portion, and, therefore, the upper substrate tends to locally contacts the lower substrate during the production process . This is why the sealing compound cannot be uniformly formed and there is a wide variation of thickness. In order to solve these problems, one may think of eliminating the space between the aligning film portion and the sealing compound portion. However, this idea is not practical in view of the positional accuracy.

The object of the present invention is to remedy the above mentioned drawbacks of the prior art and to provide a highly reliable electro-optical device which does not suffer from air bubbles or a variation of cell thickness, even if the electro-optical device is bent or locally pressed.

This object is achieved with an electro-optical device as claimed.

According to the invention, the electro-optical device comprises a pair of flexible substrates, having formed on their inner sides transparent electrodes and aligning films, and sandwiching a liquid crystal through spacers. The flexible substrates comprise at least a phenoxy resin layer and a composite film in which a plurality of polymeric resins are laminated. The transparent electrode is formed on the phenoxy resin layer. The spacers are fixed to at least one of the surfaces of the upper and lower substrates covered by the aligning film. The flexible substrates have at least one gas barrier layer of a polymeric resin, such as a polyvinyl alcohol (hereinafter referred to as PVA), on a special support substrate film. The surface of the compound film where the transparent electrode is formed is of phenoxy resin and, therefore, the gas barrier properties are very good. In addition, the surface of phenoxy resin is hard and the adhesive properties for adhering indium tin oxide (hereinafter referred to as ITO) which is used for forming the transparent electrode, is excellent.

Since some spacers are and others are not fixed to the aligning film on the substrate as mentioned above, even if the electro-optical device is bent or locally pressed, the fixed spacers prevent a variation of the cell thickness. Furthermore, if spacers which are not fixed are provided outside the sealing compound, the gap between the upper and lower substrates outside the sealing compound is uniformly controlled as is the gap between the upper and lower substrates inside the sealing compound. Therefore, even if the upper and lower substrates are presses, the gap between both substrates will be controlled by the spacers and a blurring of the sealing compound will be prevented.

As to the method for forming the gas barrier layer, there are the coating method, the laminating method, the coextrusion method, etc. Ways of carrying out the invention are described in detail below with reference to drawings which illustrate only specific embodiments and in which:

Fig. 1(a) is a sectional view of a part of a film substrate for an electro-optical device according to the present invention,

Fig. 1(b) is a sectional view of a liquid crystal cell as an embodiment of the present invention,

Fig. 2 is a graph showing the relation between the seal width and the sealing strength, and

Fig. 3 is a sectional view of a liquid crystal cell according to another embodiment of the present invention.

Example 1

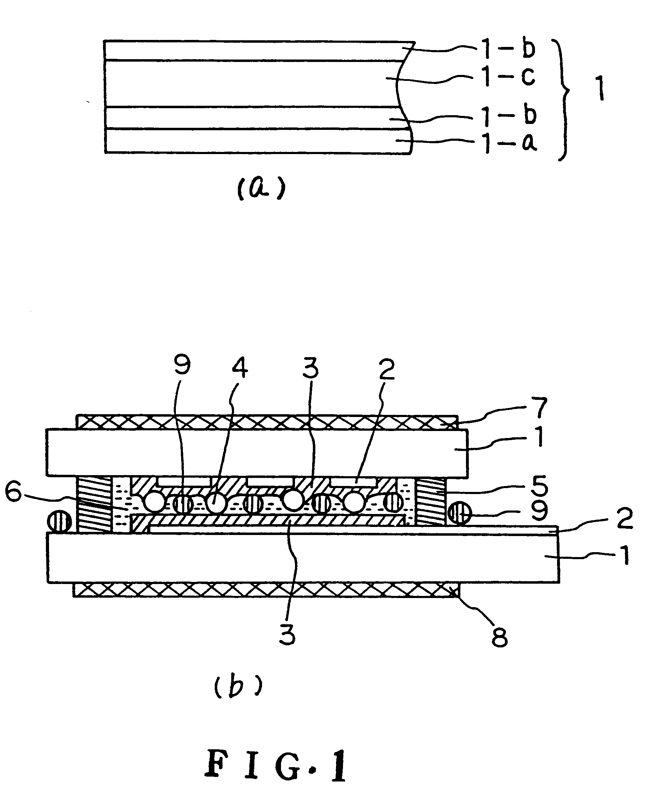

As shown in Figs. 1(a) and 1(b), a gas barrier layer 1b, i.e. an ethylenevinyl alcohol copolymer film (hereinafter referred to as EVA film) having a thickness of 5 μm was laminated on both sides of a support substrate 1-c, i.e. a polycarbonate resin film having a thickness of 75 μm. In addition, a phenoxy resin film 1-a (hereinafter referred to as GF film) having a thickness of 15 μm was laminated on one side of the laminated film (in this example, in each case the resin was formed by coating). Then an indium oxide - tin oxide transparent conductive film having a thickness of about 50 nm was formed by a low-temperature sputtering method on the composite film 1 having a total thickness of 100 μm, at the side of the GF film. Thereafter a predetermined electrode pattern 2 (see Fig. 1(b)) was formed by photolithography. By offset printing an aligning compound was then applied except for the portions where the electrode pattern is connected to external terminal portions and in the vicinity of a sealing compound. Before the evaporation of the solvent in the printed aligning film 3, spacers 4, i.e. resin balls having a diameter of 10 μm were sprayed onto the aligning film 3 by a wet-type spray (a solution in which the spacers were mixed was sprayed by an air spray) and heated for three hours at 130°C, thereby fixing the spacers onto the aligning film 3 (the density of the spacers 4 was 120/mm².

Thereafter the aligning film 3 was rubbed into a predetermined direction by means of a grinding cloth, etc. as an aligning treatment. During this treatment, the spacers 4 were not removed from the aligning film 3 at all.

The fixed spacers were provided on the wet aligning film so that they remained only on the aligning film. Then the spacers on portions other than the aligning film were removed by air pressure of a wet-type spray to avoid any problems that might be caused by spacers gathering around the aligning film during the rubbing process.

Thereafter a sealing compound 5, i.e. an epoxy adhesive having a thickness of 30 μm was printed by a screen printing process on one substrate and a conductive agent, i.e. a silver paste was printed by a screen printing process on the other substrate. Further, spacers 9, i.e. resin balls having a diameter of 10 μm were sprayed by a wet-type spray onto the aligning film 3 and the two substrates were then bonded together. The density of the spacers 9 was 80/mm².

Thereafter, a liquid crystal 6 was filled into the cell by a vacuum injection method and the injection portion was sealed by an epoxy adhesive. Polarizers 7 and 8 were adhered to the upper and lower sides of this liquid crystal cell, thereby completing a liquid crystal display device.

When the thus prepared liquid crystal display device was bent or locally pressed again and again, the device did not exhibit any defective appearance due to discoloration or air bubbles. Furthermore, owing to the spacers which were not fixed, the sealing strength was not reduced and a bleeding of the sealing compound did not occur at the terminal or any other portion of the liquid crystal display device.

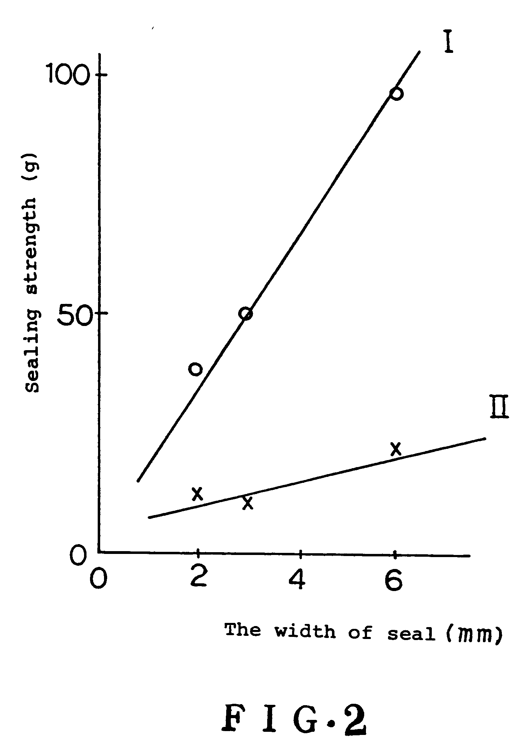

Fig. 2 shows the result of sealing strength measurements of this example in comparison with a comparative example while the sealing width was changed (here sealing width means the total width of sealing compound which contacted respective sides of the pair of film substrates). In this example there was no aligning film 3 in the region of the sealing compound 5 on film substrate 1. In the comparative example there was an aligning film 3 in the region of the sealing compound 5 on the film substrate 1. In Fig. 2 the straight line I corresponds to the example of the invention and the straight line II to the comparative example. As is clear from the drawing, the sealing strength of the example according to the invention was several times stronger than that of the comparative example.

Further, regarding the gas barrier properties of the composite film used in the present invention, the transmittance of oxygen gas was tested. At the same time the transmittance of oxygen gas in case of a PC simplex film was tested in comparison with that of the composite film. Table 1 shows the data of the test. As is clear from table 1, a composite film according to the present invention has much better gas barrier properties than a PC simplex film.

## Table 1

|  | Transmittance of oxygen gas [cc/m².atm.24Hr)] |
|---|---|
| Example 1 | 0,5 to 1,0 |
| Example 2 | 0,5 to 1,5 |
| Comparative Example (PC simplex film) | 30 to 50 |

### Example 2

A gas barrier, i.e. polyvinyl alcohol (hereinafter referred to as PVA film) having a thickness of 10 μm was laminated on both sides of a support substrate, i.e. a PC film having a thickness of 50 μm. In addition, a GF film having a thickness of 15 μm was laminated on one side of the laminated film. Thus a composite film having a thickness of 85 μm was obtained. A transparent electrode was formed on the composite film at the GF film side. Thus a liquid crystal display device according to this example was prepared in the same manner as in example 1 except for the above.

As with example 1, the reliability of this example was good.

Moreover, the gas barrier properties of the substrate film were extremely improved in comparison with a PC simplex film as shown in table 1 and the same excellent effects were obtained as with example 1.

### Example 3

A gas barrier layer, i.e. an EVA film having a thickness of 5 μm was laminated on one side of a support substrate, i.e. a PC film having a thickness of 75 μm and a PVA film having a thickness of 5 μm was laminated on the other side of the PC film. Further, a GF film having a thickness of 15 μm was laminated on the EVA film. Thus, a composite film having a thickness of 100 μm was obtained. Then a transparent electrode was formed on the composite film at the GF film side. Thus, a liquid crystal display device according to this example was prepared in the same manner as example 1 except for the above.

As a result, the same effects were obtained as with example 1.

### Example 4

A gas barrier layer, i.e. an EVA film having a thickness of 5 μm was laminated on one side of a support substrate, i.e. a PC film having a thickness of 75 μm and a PVA film having a thickness of 5 μm was laminated on the other side of the PC film. Further, a GF film having a thickness of 15 μm was laminated on the PVA film. Thus, a composite film having a total thickness of 100 μm was obtained. Then the composite film was used as a substrate. Thus, a liquid crystal display device according to this example was prepared in the same manner as example 1 except for the above. As a result, the same result as with example 1 was obtained.

### Example 5

A gas barrier layer, i.e. an EVA film having a thickness of 5 μm was laminated on both sides of a support substrate, i.e. a PC film having a thickness of 75 μm. Further, a GF film having a thickness of 15 μm was laminated on both sides of the laminated film. Thus, a total composite film having a total thickness of 115 μm was obtained. Then a transparent electrode was formed on one GF film. A liquid crystal display device according to this example was prepared in the same manner as example 1 except for the above.

### Example 6

A gas barrier layer, i.e. a PVA film having a thickness of 10 μm was laminated on both sides of a support substrate of a PC film having a thickness of 100 $\mu$m. Further, a GF film having a thickness of 10 $\mu$m was laminated on both sides of the laminated film. Thus, a composite film having a total thickness of 140 $\mu$m was obtained. Then a transparent electrode was formed on one GF film. Thus, a liquid crystal display device according to this example was prepared in the same manner as example 1 except for the above.

Example 7

A gas barrier layer, i.e. an EVA film having a thickness of 5 $\mu$m was laminated on one side of a support substrate, i.e. a PC film having a thickness of 75 $\mu$m and a PVA film having a thickness of 5 $\mu$m was laminated on the other side of the PC film. A GF film having a thickness of 15 $\mu$m was laminated on both sides of the laminated film, thereby obtaining a composite film having a total thickness of 115 $\mu$m. The composite film was used as a substrate, and a transparent electrode was formed on a GF film at the EVA film side. Thus, a liquid crystal display device according to this example was prepared in the same manner as example 1 except for the above.

Example 8

A gas barrier layer, i.e. an EVA film having a thickness of 5 $\mu$m was laminated on one side of a support substrate, i.e. a PC film having a thickness of 75 $\mu$m and a PVA film having a thickness of 5 $\mu$m was laminated on the other side of the PC film. Thus, a composite film having a total thickness of 115 $\mu$m was obtained. The composite film was used as a substrate and a transparent electrode was formed on a GF film at the side of the PVA film. Thus, a liquid crystal device according to this example was prepared in the same manner as example 1 except for the above.

Example 9

A gas barrier layer, i.e. an EVA film having a thickness of 5 $\mu$m was laminated on both sides of a support substrate, i.e. a polyarylate resin film having a thickness of 75 $\mu$m (hereinafter referred to as a UP film). Further, a GF film having a thickness of 15 $\mu$m was laminated on one of the laminated layers. Then a transparent electrode was formed on the composite film at the side of the GF film. Thus, a liquid crystal display device according to this example was prepared in the same manner as example 1 except for the above. This example was as good in view of manufacture and reliability as example 1.

Example 10

A gas barrier layer having a thickness of 15 $\mu$m was laminated on both sides of a support substrate, i.e. a UP film having a thickness of 50 $\mu$m. Further, a GF film having a thickness of 15 $\mu$m was laminated on one side of the laminated film, thereby obtaining a composite film having a total thickness of 95 $\mu$m. A transparent electrode was formed on the composite film at the side of the GF film. Thus, a liquid crystal display device according to this example was the same as example 1 except for the above.

Example 11

A gas barrier layer, i.e. an EVA film having a thickness of 10 $\mu$m was laminated on one side of a support substrate, i.e. a UP film having a thickness of 75 $\mu$m and a PVA film having a thickness of 10 $\mu$m was laminated on the other side of the support substrate. Further, a GF film having a thickness of 5 $\mu$m was laminated on the EVA film. Thus, a composite film having a thickness of 100 $\mu$m was obtained. A transparent electrode was formed on the composite film. Thus, a liquid crystal display device according to this example was prepared in the same way as example 1 except for the above.

Example 12

A gas barrier layer, i.e. an EVA film having a thickness of 5 $\mu$m was laminated on one side of a support substrate, i.e. a UP film having a thickness of 75 $\mu$m and a PVA film having a thickness of 5 $\mu$m was laminated on the other side of the support substrate. Further, a GF film having a thickness of 15 $\mu$m was laminated thereon at the side of the PVA film, thereby obtaining a composite film having a total thickness of 100 $\mu$m. A transparent electrode was formed on the composite film at the side of the GF film. Thus, a liquid crystal display device according to this example was prepared in the same manner as example 1 except for the above.

### Example 13

A gas barrier layer, i.e. an EVA film having a thickness of 5 μm was laminated on both sides of a support substrate, i.e. a UP film having a thickness of 75 μm. Further, a GF film having a thickness of 15 μm was laminated on both sides of the laminated film. Thus, a composite film having a total thickness of 115 μm was obtained. Then a transparent electrode was formed thereon at the GF film side. Thus, a liquid crystal display device according to this example was prepared in the same manner as example 1 except for the above.

### Example 14

A gas barrier layer, i.e. a PVA film having a thickness of 10 μm was laminated on both sides of a support substrate, i.e. a UP film having a thickness of 50 μm. Further, a GF film having a thickness of 15 μm was laminated on both sides of the laminated film. Thus, a composite film having a total thickness of 115 μm was obtained. Then a transparent electrode was formed thereon at the GF film side. Thus, a liquid crystal display device according to this example was prepared in the same manner as example 1 except for the above.

### Example 15

A gas barrier layer, i.e. an EVA film having a thickness of 5 μm was laminated on one side of a support substrate, i.e. a UP film having a thickness of 75 μm and a PVA film having a thickness of 5 μm was laminated on the other side of the support substrate. Further, a GF film having a thickness of 15 μm was laminated on both sides of the laminated film, thereby obtaining a total thickness of 115 μm. The composite film was used as a substrate. A transparent electrode was formed on the GF film at the EVA film side. Thus, a liquid crystal display device according to this example was prepared in the same manner as example 1 except for the above.

### Example 16

A gas barrier layer, i.e. an EVA film having a thickness of 5 μm was laminated on one side of a support substrate, i.e. a UP film having a thickness of 75 μm and a PVA film having a thickness of 5 μm was laminated on the other side of the support substrate. Further, a GF film having a thickness of 15 μm was laminated on both sides of the laminated film, thereby obtaining a total thickness of 115 μm. The composite film was used as a substrate. A transparent electrode was formed on the GF film at the PVA film side. Thus, a liquid crystal display device according to this example was prepared in the same manner as example 1 except for the above.

### Example 17

A gas barrier layer, i.e. an EVA film having a thickness of 5 μm was laminated on both sides of a support substrate, i.e. a polyethersurphone resin film (hereinafter referred to as PES). Further, a GF film having a thickness of 15 μm was laminated on one side of the laminated film, thereby obtaining a composite film having a total thickness of 100 μm. The composite film was used as a substrate. A transparent electrode was formed on the composite film substrate at the GF film side. Thus, a liquid crystal display device according to this example was prepared in the same manner as example 1 except for the above. The properties of this example were as good as those of example 1 in view of manufacture and reliability.

### Example 18

A gas barrier layer, i.e. a PVA film having a thickness of 5 μm was laminated on both sides of a support substrate, i.e. a PES film having a thickness of 100 μm. Further, a GF film having a thickness of 5 μm was laminated on one side of the laminated film, thereby obtaining a composite film having a thickness of 115 μm. A transparent electrode was formed on the composite film at the GF film side. Thus, a liquid crystal display device according to this example was prepared in the same manner as example 1 except for the above.

### Example 19

A gas barrier layer, i.e. an EVA film having a thickness of 5 μm was laminated on one side of a support substrate, i.e. a PES film having a thickness of 75 μm, and a gas barrier layer, i.e. a PVA film having a thickness of 5 μm was laminated on the other side of the support substrate. Further, a GF film having a thickness of 15 μm was laminated thereon at the side of the EVA film. Thus, a composite film having a total thickness of 100

µm was obtained. A transparent electrode was formed on the composite film at the GF film side. Thus, a liquid crystal display device according to this example was prepared in the same manner as example 1 except for the above.

Example 20

A gas barrier layer, i.e. an EVA film having a thickness of 5 µm was laminated on one side of a support substrate, i.e. a PES film having a thickness of 75 µm, and a gas barrier layer having a thickness of 5 µm was laminated on the other side of the support substrate. Further, a GF film having a thickness of 15 µm was laminated thereon at the PVA film side. Thus, a composite film having a total thickness of 100 µm was formed. A transparent electrode was formed on the composite film at the GF film side. Thus, a liquid crystal display device according to this example was prepared in the same manner as example 1 except for the above.

Example 21

A gas barrier layer, i.e. an EVA film having a thickness of 5 µm was laminated on both sides of a support substrate, i.e. a PES film having a thickness of 75 µm. Further, a GF film having a thickness of 15 µm was laminated on both sides of the laminated film. Thus, a composite film having a total thickness of 115 µm was obtained. A transparent electrode was formed on the composite film at the GF film side. The liquid crystal display device according to this example was prepared in the same manner as example 1 except for the above.

Example 22

A gas barrier layer, i.e. a PVA film having a thickness of 10 µm was laminated on both sides of a support substrate, i.e. a PES film having a thickness of 50 µm. Further, a GF film having a thickness of 10 µm was laminated on both sides of the laminated film. Thus, a composite film having a total thickness of 90 µm was obtained. A transparent electrode was formed on the GF film side. The liquid crystal display device according to this example was prepared in the same manner as example 1 except for the above.

Example 23

A gas barrier layer, i.e. an EVA film having a thickness of 15 µm was laminated on one side of a support substrate, i.e. a PES film having a thickness of 100 µm, and a gas barrier layer, i.e. a PVA film having a thickness of 15 µm was laminated on the other side of the support substrate. Further, a GF film was laminated on both sides of the laminated film. Thus, a composite film having a total thickness of 140 µm was obtained and used as a substrate. A transparent electrode was formed on the GF film at the side of the EVA film. Thus, a liquid crystal display device according to this example was prepared in the same manner as example 1 except for the above.

Example 24

A gas barrier layer, i.e. an EVA film having a thickness of 5 µm was laminated on one side of a support substrate, i.e. a PES film, and a gas barrier layer, i.e. a PVA film having a thickness of 5 µm was laminated on the other side of the support substrate. Further, a GF film having a thickness of 15 µm was laminated on both sides of the laminated film. Thus, a composite film having a total thickness of 115 µm was obtained and used as a substrate. A transparent electrode was formed on the GF film at the PVA film side. Thus, a liquid crystal display device according to this example was prepared in the same manner as example 1 except for the above.

Example 25

A support substrate, i.e. a 75 µm thick UP film was laminated on one side of a gas barrier layer, i.e. an EVA film having a thickness of 10 µm, and a GF film having a thickness of 15 µm was laminated thereon, thereby obtaining a composite film having a total thickness of 100 µm. A transparent electrode was formed on the composite film at the GF film side. Thus, a liquid crystal display device according to this example was prepared in the same manner as example 1 except for the above.

7

## Example 26

A support substrate, i.e. a UP film having a thickness of 75 μm was laminated on one side of a gas barrier layer, i.e. an EVA film having a thickness of 10 μm, and a GF film having a thickness of 15 μm was laminated thereon. Further, an epoxy resin film (hereinafter referred to as EP film) was laminated on the other side of the EVA film. Thus, a composite film having a total thickness of 110 μm was obtained. A transparent electrode was formed on the composite film at the GF film side. Thus, a liquid crystal display device according to this example was prepared in the same manner as example 1 except for the above. The EP film according to this example compensates for the durability of the EVA film and also serves as a gas barrier layer.

## Example 27

A support substrate, i.e. a UP film having a thickness of 75 μm was laminated on one side of a gas barrier layer, i.e. an EVA film having a thickness of 10 μm, and an EP film having a thickness of 10 μm was laminated thereon. A GF film having a thickness of 15 μm was laminated on the other side of the EVA film. Thus, a composite film having a total thickness of 110 μm was obtained. A transparent electrode was formed on the composite film at the GF film side. Thus, a liquid crystal display device according to this example was prepared in the same manner as example 1 except for the above.

## Example 28

A GF film having a thickness of 40 μm was laminated on both sides of a gas barrier layer, i.e. an EVA film having a thickness of 20 μm. Thus, a composite film having a total thickness of 100 μm was obtained. The composite film was used as a substrate. Thus, a liquid crystal display device according to this example was prepared in the same manner as example 1 except for the above. This example was as good as example 1 in view of manufacture and reliability.

## Example 29

A PES film having a thickness of 75 μm was laminated on one side of a gas barrier layer, i.e. an EVA film having a thickness of 10 μm and a GF film having a thickness of 15 μm was laminated on the other side of the EVA film. Thus, a composite film having a total thickness of 100 μm was obtained and used as a substrate. Thus, a liquid crystal display device according to this example was prepared in the same manner as example 1 except for the above.

In the above mentioned examples various combinations of a gas barrier layer and a support substrate are used. The gas barrier properties are improved in proportion to the increase of the thickness of the gas barrier layer. However, when the thickness of the gas barrier layer is increased with respect to only a single surface, the composite film tends to be warped due to asymmetrical properties. Therefore, gas barrier layers should be desirably laminated on both sides of a support substrate. Further, it is necessary to keep the balance between the support substrate thickness and the gas barrier layer thickness because there is a limitation in the total thickness. Concretely, the film thickness as a support substrate is desirably between 50 and 200 μm, and the film thickness of a gas barrier layer is desirably between 1 and 50 μm.

## Example 30

In this example, a glass fiber as a spacer having a diameter of 10 μm and the length of 50 μm was fixed onto the aligning film 3 in the same manner as resin balls, and thereafter resin balls as spacers 9 having a diameter of 10 μm were dispersed onto the aligning film 3. The other processes for obtaining a liquid crystal display device were the same as with example 1. In this case no problems arise from the fact that resin balls and a glass fiber are used as spacers which are not fixed and a spacer which is fixed, respectively.

## Example 31

In this example, the density of resin balls which were fixed to the aligning film 3 was 30 per $mm^2$ and the density of resin balls which were not fixed to the aligning film 3 was 20 per $mm^2$. The other processes for obtaining a liquid crystal display device were the same as with example 1.

Example 32

In this example, the density of resin balls which were fixed to the aligning film 3 was 200 per mm$^2$ and the density of resin balls which were not fixed was 20 per mm$^2$. The other processes for obtaining a liquid crystal display device were the same as with example 1.

Example 33

In this example, the density of resin balls which were fixed to the aligning film 3 was 200 per mm$^2$ and the density of resin balls which were not fixed to the aligning film 3 was 120 per mm$^2$. The other processes for obtaining a liquid crystal display device were the same as with example 1.

Example 34

In this example, the density of resin balls which were fixed to the aligning film 3 was 300 per mm$^2$ and the density of resin balls which were not fixed to the aligning film 3 was 160 per mm$^2$. The other processes for obtaining a liquid crystal display device were the same as with example 1.

Example 35

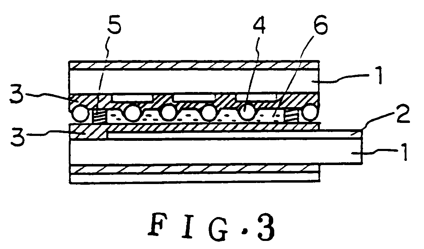

As shown in Fig. 3, an aligning film 3 was printed by offset printing on the whole surface of a film substrate 1 except for the terminal portion which contacts with an external driving circuit. Before the solvent in the printed aligning film 3 was evaporated, resin balls 4 having a diameter of 10 μm were dispersed thereon, and followed by baking. The other processes for obtaining a liquid crystal display device were the same as with example 1 including the non-fixed spacers even though they are not shown in Fig. 3.

In this example, a sealing compound 5 was provided on the aligning film 3. If a high sealing strength is required, the aligning film should desirably not be formed on the sealing forming region like in example 1.

In each example, a film may be laminated on the other different-type film by a laminating method or a coating method of polymeric resin.

Further, in each example, where a GF film is formed on both outer sides of a composite film, the GF film on which no transparent electrode is formed can be replaced with acrylic resin, polyester resin or the like.

Furthermore, as other methods for fixing spacers to an aligning film, there are the following methods:

(1) The solution in which spacers are dispersed is sprayed with air onto a flexible substrate on which an electrode pattern is formed. Then aligning compound is printed thereon by offset printing and followed by baking.

(2) The aligning compound already mixed with spacers is printed by offset printing and followed by baking.

Moreover, needless to say, the spacers may be fixed to one or both of the substrates. With respect to the spacer material, inorganic or organic materials can be used. The shape of the spacers is desirably spherical or cylindrical.

The density of the spacers relates to the reliability for holding a gap between the substrates. The larger the density of spacers is, the higher is the reliability for holding a gap between substrates. If the density of spacers is too large, the aligning treatment tends to be defective.

In accordance with the movement of the spacers which are not fixed, e.g. resin balls, the cell thickness changes. Therefore, it is desirable that the number of spacers which are fixed is at least larger than that of spacers which are not fixed.

Further, the total of the density of spacers which are fixed and the density of spacers which are not fixed is desirably 50 to 500 per mm$^2$, since then good effects are obtained.

Moreover, in the above examples, a liquid crystal display device is used as an example. Besides that the present invention can be applied to optical electric elements which function as an optical shutter, such as a liquid crystal panel for an electric sun glass.

Therefore, the present invention is not limited to only a liquid crystal display device.

As mentioned above, the present invention comprises a flexible substrate, i.e. polymeric resin film having at least one gas barrier layer, a composite film on whose phenoxy resin surface a transparent electrode is formed. Further, some spacers are fixed to and the other spacers are not fixed to the aligning film formed on the flexible substrate. Therefore, a thus obtained liquid crystal display device does not exhibit defective appearance and air bubbles if it is bent or locally pressed, thereby improving the reliability.

Furthermore, in view of manufacture of a liquid crystal element, the spacers are not fixed to a terminal portion and removed in a washing process. Therefore, a stable coupling portion is provided.

Furthermore, the present invention eliminates the poor condition of a display caused by contacting of the upper and lower substrates together while the display is curved.

## The List of Examples 1 to 29

| No. | Formation | Thickness |
|---|---|---|
| 1 | EVA/PC/EVA/GA | 100 µm |
| 2 | PVA/PC/PVA/GF | 85 µm |
| 3 | PVA/PC/EVA/GF | 100 µm |
| 4 | EVA/PC/PVA/GF | 100 µm |
| 5 | GF/EVA/PC/EVA/GF | 115 µm |
| 6 | GF/PVA/PC/PVA/GF | 140 µm |
| 7 | GF/PVA/PC/EVA/GF (ITO) | 115 µm |
| 8 | GF/EVA/PC/PVA/GF (ITO) | 115 µm |
| 9 | EVA/UP/EVA/GF | 100 µm |
| 10 | PVA/UP/PVA/GF | 95 µm |
| 11 | PVA/UP/EVA/GF | 100 µm |
| 12 | EVA/UP/PVA/GF | 100 µm |
| 13 | GF/EVA/UP/EVA/GF | 115 µm |
| 14 | GF/PVA/UP/PVA/GF | 100 µm |
| 15 | GF/PVA/UP/EVA/GF | 115 µm |
| 16 | GF/EVA/UP/PVA/GF | 115 µm |
| 17 | EVA/PES/EVA/GF | 100 µm |
| 18 | PVA/PES/PVA/GF | 115 µm |
| 19 | PVA/PES/EVA/GF | 100 µm |
| 20 | EVA/PES/PVA/GF | 100 µm |
| 21 | GF/EVA/PES/EVA/GF | 115 µm |
| 22 | GF/PVA/PES/PVA/GF | 90 µm |
| 23 | GF/PVA/PES/EVA/GF | 140 µm |
| 24 | GF/EVA/PES/PVA/GF | 115 µm |
| 25 | EVA/UP/GF | 100 µm |
| 26 | EP/EVA/UP/GF | 110 µm |
| 27 | EP/UP/EVA/GF | 110 µm |
| 28 | GF/EVA/GF | 100 µm |
| 29 | PES/EVA/GF | 100 µm |

## Claims

1. An electro-optical device comprising
   a pair of flexible substrates (1) opposing each other and sandwiching a liquid crystal material (6) therebetween, said substrates being bonded together by a sealing compound (5),

a transparent electrode (2) and an aligning film (3) formed on the inner surface of each of said substrates, and

spacers (4, 9) provided between said substrates in those areas corresponding to said aligning films, wherein a first plurality of said spacers (4) are fixed only to one of said aligning films,

characterized in that a second plurality of said spacers (9) are not fixed to either aligning film.

2. The device of claim 1 wherein a third plurality of said spacers are fixed only to the other aligning film.

3. The device of claim 1 or 2 wherein the total number of fixed spacers (4) is higher than the number of non-fixed spacers (9).

4. The device of any of claims 1 to 3 wherein each substrate comprises at least a phenoxy resin layer (1-a) and a composite film (1-b, 1-c) including a plurality of laminated polymeric resin layers.


## Patentansprüche

1. Elektrooptische Vorrichtung, umfassend

ein Paar flexibler Substrate (1), die einander gegenüberliegen und ein Flüssigkristallmaterial (6) zwischen sich einschließen, wobei die Substrate mittels einer Dichtmasse (5) miteinander verbunden sind,

eine transparente Elektrode (2) und einen Ausrichtungfilm (3), die an der Innenfläche jedes der Substrate ausgebildet sind, und

Abstandshalter (4, 9), die zwischen den Substraten in den den Ausrichtungsfilmen entsprechenden Bereichen vorgesehen sind, wobei eine erste Vielzahl der Abstandshalter (4) nur an einem der Ausrichtungsfilme fixiert ist,

dadurch gekennzeichnet, daß eine zweite Vielzahl der Abstandshalter (9) an keinem der Ausrichtungsfilme fixiert ist.

2. Vorrichtung nach Anspruch 1, bei der eine dritte Vielzahl der Abstandshalter nur an dem anderen Ausrichtungsfilm fixiert ist.

3. Vorrichtung nach Anspruch 1 oder 2, bei der die Gesamtanzahl von fixierten Abstandshaltern (4) größer als die Anzahl von nicht-fixierten Abstandshaltern (9) ist.

4. Vorrichtung nach einem der Ansprüche 1 bis 3, bei der jedes Substrat wenigstens eine Phenoxy-Harzschicht (1-a) und einen Verbundfilm (1-b, 1-c) aufweist, der eine Vielzahl von laminierten Polymer-Harzschichten enthält.


## Revendications

1. Un dispositif électro-optique comprenant

une paire de substrats flexibles (1) disposés face à face et entre lesquels est intercalée une matière à cristal liquide (6), ces substrats étant fixés ensemble par un composé assurant l'étanchéité (5), une électrode transparente (2) et une pellicule d'alignement (3) formées sur la surface intérieure de chacun des substrats, et

des entretoises (4, 9) disposées entre les substrats dans les régions qui correspondent aux pellicules d'alignement, les entretoises (4) d'un premier ensemble étant fixées seulement à l'une des pellicules d'alignement,

caractérisé en ce que les entretoises (9) d'un second ensemble ne sont fixées à aucune pellicule d'alignement.

2. Le dispositif se la revendication 1, dans lequel les entretoises d'un troisième ensemble sont fixées seulement à l'autre pellicule d'alignement.

3. Le dispositif de la revendication 1 ou 2, dans lequel le nombre total d'entretoises fixées (4) est supérieur au nombre d'entretoises non fixées (9).

4. Le dispositif de l'une quelconque des revendications 1 à 3, dans lequel chaque substrat comprend au moins une couche de résine phénoxy (1-a) et une pellicule composite (1-b, 1-c) comprenant un ensemble de couches de résines polymères stratifiées.

(a)

(b)

FIG·1

F I G · 2

$FIG \cdot 3$